# EUROPEAN PATENT SPECIFICATION

(11) **EP 0 314 342 B1**
(45) Date of publication and mention of the grant of the patent: **08.03.1995**
(21) Application number: 88309574.7
(22) Date of filing: 13.10.1988
(51) Int. Cl.: G06F 15/76

(54) **Parallel pipelined computer processor**
Parallele Pipelinerechner
Calculateur parallèle de structure pipeline

(30) Priority: 30.10.1987 US 115150
(43) Date of publication of application: 03.05.1989
(73) Proprietor: International Business Machines Corporation, Armonk, N.Y. 10504 (US)
(72) Inventor: Nuechterlein, David William, Durham North Carolina 27713 (US); Rinaldi, Mark Anthony, Durham North Carolina 27713 (US)
(74) Representative: Burt, Roger James, Dr.

(56) References cited:
- EP-A- 0 201 088
- GB-A- 2 074 764
- PROCEEDINGS OF THE IEEE 1980 NATIONAL AEROSPACE AND ELECTRONICS CONFERENCE,20th - 22nd May 1980, pages 862-866, IEEE, NY, US; E.P. BERLIN, Jr.: "An advanced multiprocessor architecture - skewed processing"
- 1981 7TH EUROMICRO SYMPOSIUM ON MICROPROCESSING AND MICROPROGRAMMING, Paris,8th - 10th September 1981, pages 371-379, EUROMICRO; P. KACSUK: "A data driven emulator module based on a concurrent pascal oriented multiple microprcessor system"
- E.J. Mc Cluskey: "Logic Design Principles", Prentice Hall, 1986; pages 142-144

## Description

The present invention relates to parallel computer processing, and more particularly relates to an improved processor and parallel and/or pipeline configuration thereof.

Computer graphics algorithm advances are placing increasing demands on processing systems for example algorithms for the complex matrix multiplications involved in the transformations performed on graphics data elements. These demands have led to discussions, regarding configuring processors, usually microprocessors, in parallel and/or pipeline configurations so as to perform this processing in a more efficient and rapid manner.

A geometry processor for graphics processing is disclosed in "A VLSI Geometry Processor for Graphics", James Clark, Computer, July 1980, pp. 59-68. The processor disclosed therein includes an ALU, three registers and a stack, and is designed to do parallel adds, subtracts, and similar two-variable operations. It is designed for parallel arrangement for matrix multiplication. However, programming of, and control of the processor described in the Clark article is complex, requiring external arbitration logic.

EP-A-0201088 discloses a parallel computer comprising a plurality of processors connected to data lines which can catenate external FIFO buffer memories such that each processor's input to and output from each FIFO buffer memory is independent of the operating conditions of the other processors.

A discussion of wired logic can be found, for example, in E J McCluskey: "Logic Design Principles", Prentice Hall, 1986, pages 142-144. It is noted that one of the most important applications of wired logic is for multiplexing onto a bus.

It is an object of the present invention to provide a processor, such as a microprocessor, capable of being connected in parallel and/or pipeline, that is relatively easy to program and to control in the execution of complex mathematical operations, such as matrix multiplications, as compared with prior art processors.

According to the present invention a computer processor is provided comprising a plurality of processors interconnected in parallel for receiving and processing input data, each processor having an arithmetic logic unit, a first-in-first-out (FIFO) output register stack, and control means, characterised in that: the processors have respective output data lines designed and interconnected such that the result of an individual processor's processing of input data is present at the output of the interconnected plurality of processors provided that the interconnected processors other than said individual processor have a predetermined neutral value present at their output data lines; and the control means is adapted to allocate input data to the individual interconnected processors, to control writing of the results of their processing of the input data to their respective FIFO output register stacks, and, in correspondence to the writing of an individual processor's processing results, to write a neutral value to the respective FIFO output register stacks of the other processors so that said predetermined neutral value is present at said other processors' output data lines when the results of said processing are present at the output data lines of the processor which performs the processing, thereby to sequence the outputs of the interconnected processors such that no more than one processor at any one time has present at its output data lines the results of its processing of input data.

It is preferred to provide a computer system in which the plurality of processors have their inputs connected in parallel to an input bus, and have their outputs connected in, for example, wire AND, and in addition the computer system has system elements for providing input data and control data for a portion of computation to be performed in one clock cycle on the input bus. The control data controls each of the processors to respectively compute the portion of computation allocable to that processor and to place in its output FIFO stack the result of its computation, or a neutral value, for example a logical "1", depending upon its relative position with respect to the computation being performed, such that the processors perform multiple computations and place either their portion of computational output, or a "1", as the case may be, at their outputs so as to properly sequence their outputs for proper logical flow to form the ultimate result.

The present invention thus provides a significant improvement in cost and speed for parallel pipelined processing, as compared with prior art configurations. It eliminates the need to have control over several processors by way of external arbitration logic to effect strict time division multiplexing, under bus master/slave protocol.

In order that the invention may be fully understood it will now be described by way of example with reference to the accompanying drawings, in which:

Fig. 1 shows a block diagram of a processing system according to the preferred embodiment of the present invention.

Fig. 2 shows a block diagram of an individual processor according to the preferred embodiment of the present invention.

Figs. 3A and 3B are representations of the contents of the output FIFOs of several processors according to the present invention connected in parallel.

Fig. 4 shows a more detailed diagram of the output FIFO of the processor shown in Fig. 2.

Fig. 5 is a more detailed diagram of the internals of the output FIFO controls of the output FIFO shown in Fig. 4.

Fig. 6 shows the state diagram and next state equations for the state machine shown in Fig. 5.

Fig. 7 shows a more detailed diagram of the input FIFO of the processor shown in Fig. 2.

Fig. 8 shows the internals of the input FIFO controls of the input FIFO shown in Fig. 7.

Fig. 9 is a diagram based on Fig. 1 that shows the connection of four processors in accordance with the preferred embodiment of the present invention.

Fig. 10A and 10B are diagrams similar to the diagrams of Figs. 3A and 3B.

Figs. 11A and 11B are diagrams similar to those shown in Figs. 10A and 10B.

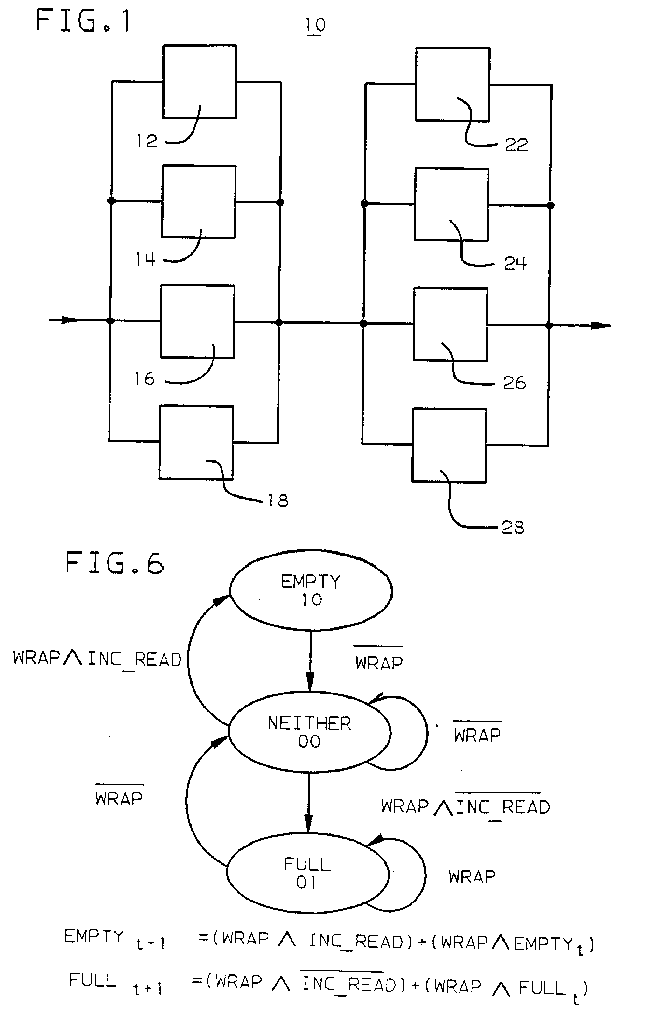

Fig. 1 illustrates a processing system 10 comprised of a parallel and pipeline configuration of processors 12-28. Such a configuration of processors is desirable, for example, when a number of multiplications such as matrix multiplications are to be performed. Pipelining and parallel processing permit multiplying the matrix in fewer cycles than is possible using a single processor.

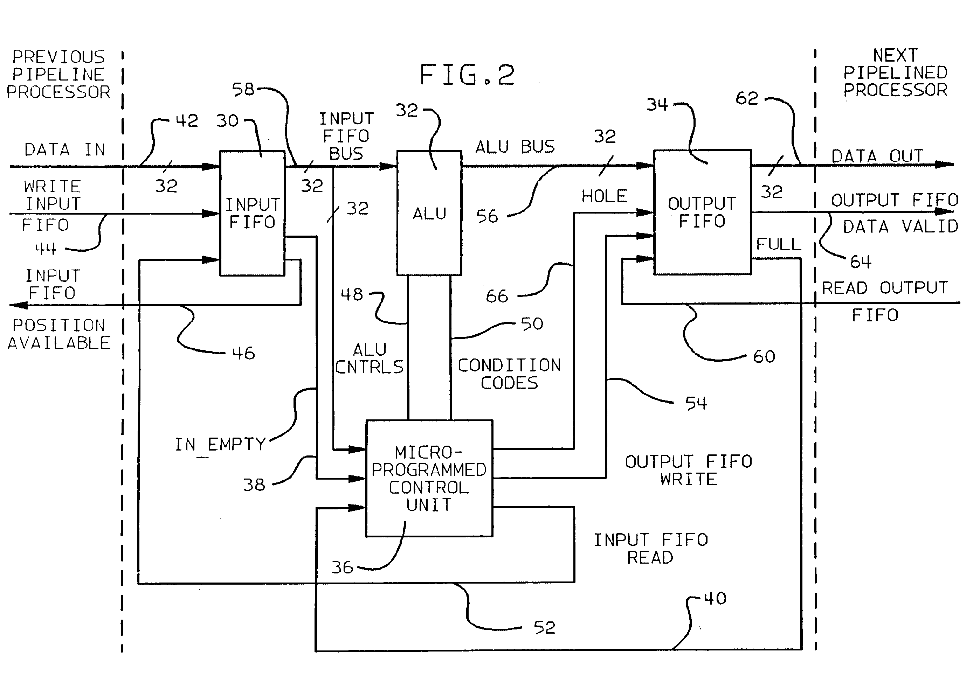

Fig. 2 is a block diagram of a processing element according to the preferred embodiment of the present invention, comprising an INPUT FIFO 30, ALU 32, OUTPUT FIFO 34, and MICROPROGRAMMED CONTROL UNIT ("MCU") 36. This combination together makes up a complete, individual processing element, such as one of the processors 12-28 (Fig. 1). Important to the present invention is the OUTPUT FIFO 34 and its connections within and external to the processing element which contains it.

Each such processing element is under the control of its MCU 36. This type of control unit is well known. It is configured to have the ability to control the reading of data from an input device, control the functions of the ALU 32, and to control writes to an output device. In addition, it is configured to be able to test the status of the EMPTY line 38 from the INPUT FIFO 30, and the FULL line 40 from the OUTPUT FIFO 34, and under the appropriate conditions, to wait in idle cycles based on the status of these lines. It is configured to generate idle cycles when the microprogram attempts to either read an empty INPUT FIFO 30, or write a full OUTPUT FIFO 34. It continues to execute idle cycles until some other processing element puts data in its INPUT FIFO 30 or takes data out of its OUTPUT FIFO 34, whichever is appropriate.

The functions of the ALU 32 in the preferred embodiment include floating point multiplication and addition so as to allow high speed computation of matrix multiply algorithms, as this is considered a desirable application. INPUT FIFO 30 provides buffering which assists in the smooth operation of the processing element, particularly when pipelined. It is similar in construction to the OUTPUT FIFO 34, both described below in more detail.

The other lines shown in Fig. 2, namely the DATA IN line 42, a WRITE INPUT FIFO line 44, the INPUT FIFO POSITION AVAILABLE line 46, the ALU CONTROL line 48, CONDITION CODES line 50, INPUT FIFO READ line 52, OUTPUT FIFO WRITE line 54, ALU BUS line 56, INPUT FIFO BUS 58, READ OUTPUT FIFO line 60, DATA OUT line 62, are all standard lines having standard features implemented according to well known techniques in the prior art. OUTPUT FIFO DATA VALID 64 and HOLE line 66 are described in more detail below.

Before describing the operation of the OUTPUT FIFO 34 shown in Fig. 2, a brief description of the concept of a "hole" will now be presented. A more detailed description of the operation of a "hole" is presented further below herein.

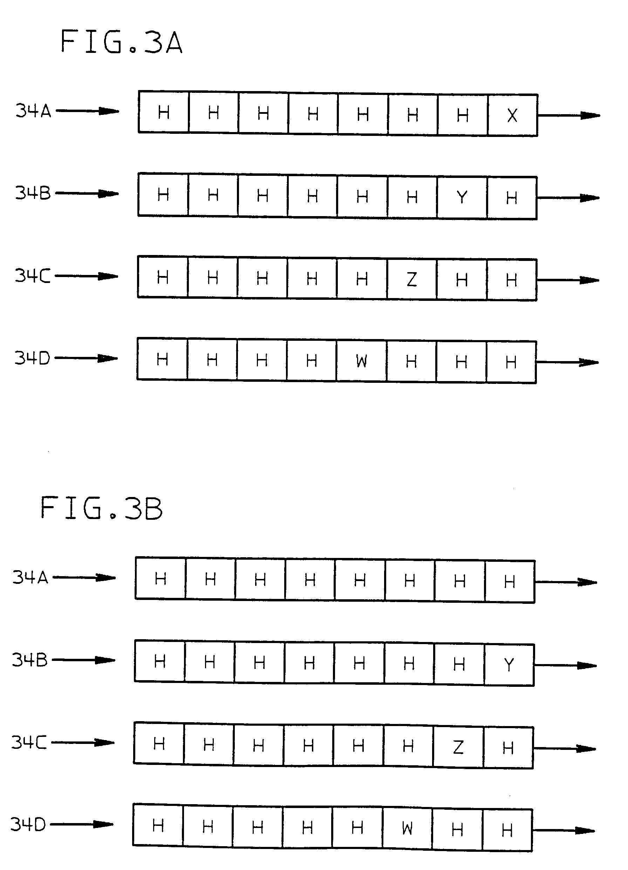

Figs. 3A and 3B are representations of the contents of OUTPUT FIFOs 34A-D for the four processors 12, 14, 16, 18, respectively. In these diagrams an "H" represents a data "hole", a place keeper in the FIFO register, and no data. In the preferred embodiment, a hole is created by the loading of all "1s" in that register location. The register contents are the result of, for example, a vector calculation being performed, in which the quantities X, Y, Z, and W are calculated, in parallel, by the respective processors 12-18. These processors are programmed such that their respective results appear sequentially one after the other at their outputs.

In Fig. 3A, the result of the calculation of the value X appears at the output of FIFO 34A. Holes appear at all of the other OUTPUT FIFOs 34C-D. As mentioned above, the output drivers of the output FIFOs are open collector in the preferred embodiment. Since the holes are data "1s", the value appearing on the output bus to which all of the output FIFOs are connected will be the value X, unaffected by the contents of any of the other output FIFOs.

Fig. 3B shows the contents of these output FIFOs one cycle later, with the result of the Y computation being presented at the output of OUTPUT FIFO 34B. Holes appear at all of the other OUTPUT FIFOs 34A, C, D. It is thus apparent how, by the loading of holes at appropriate locations, parallel computations may be performed, and the results of these computations placed sequentially on an output bus to which all of the parallel processors are connected.

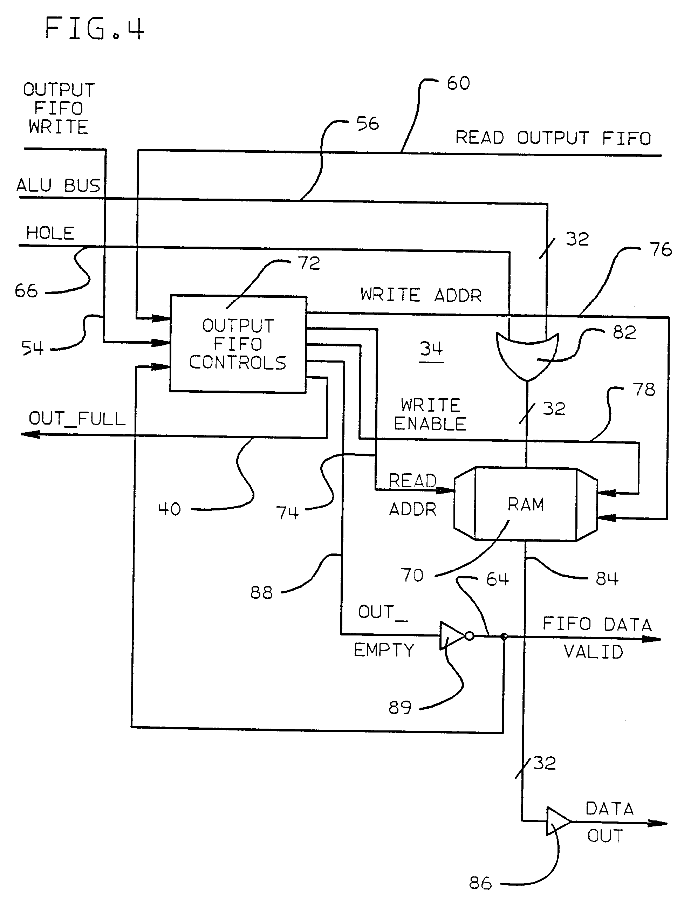

Returning now to Fig. 2, OUTPUT FIFO 34 is a synchronous FIFO in that it is clocked by a single system clock that is brought to each processing element. The input side of OUTPUT FIFO 34 and the output side of the OUTPUT FIFO 34 are run at the same clock rate. Fig. 4 shows in more detail the OUTPUT FIFO 34 of the preferred embodiment of the present invention. The OUTPUT FIFO 34 is built upon an 8 × 32 dual-port Random Access Memory ("RAM") 70, and the necessary logic, OUTPUT FIFO CONTROLS 72, to control it. This RAM 70 has standard READ ADDRESS input 74, WRITE ADDRESS input 76, and WRITE ENABLE input 78 which are provided by OUTPUT FIFO CONTROLS 72. It is capable of doing a read and a write on every cycle. The input bus 80 is the output of thirty two dual input OR gates 82. The inputs to the thirty two dual input OR gates are the individual bits of the thirty two bit wide ALU BUS 56, and common to all thirty two gates is the HOLE line 66. When active, the HOLE line 66 causes the input to the RAM 70 to be all "1s". The MCU 36 (Fig. 2) uses this line to generate the above-mentioned neutral value to be written to the OUTPUT FIFO 34.

The lines of the output bus 84 of the RAM 70 are connected as inputs to the non-inverting open collector drivers 86. The outputs of drivers 86 are taken out of the processing element for connection to the open collector drivers of the output FIFOs in other processing elements to which this processing element may be connected in parallel.

The OUTPUT FIFO CONTROLS 72 produces the FULL and OUT_EMPTY signals in addition to the write address, read address, and write enable signals already mentioned. The OUT_EMPTY signal line 88 is an input to inverting open collector driver 89 which is taken out of this processing element and connected in parallel with the outputs of the other inverting drivers of other output FIFOs in a manner similar to the DATA OUT BUS 62 described above.

The OUTPUT FIFO CONTROLS 72 receive as an input the READ OUTPUT FIFO line 60 and the OUTPUT FIFO WRITE line 54 and the OUTPUT FIFO DATA VALID line 64. The READ OUTPUT FIFO line 60 comes from the input FIFO controls of the processing element in the next stage. The OUTPUT FIFO WRITE line 54 is generated internally to this processing element by the MCU 36 (Fig. 2). The OUTPUT FIFO DATA VALID signal is generated by the DOT AND connection as previously described. It is important to note that the value on the OUTPUT FIFO DATA VALID line 64 is not simply the inversion of the OUT_EMPTY line 88. It will be de-asserted if EMPTY is asserted, but it can be asserted only if all OUTPUT FIFOs to which it is connected in parallel are attempting to de-assert their respective internal EMPTY line due to the DOT AND function of the open collector driver. The OUTPUT FIFO DATA VALID 64 line represents that all parallel connected output FIFOs are not empty.

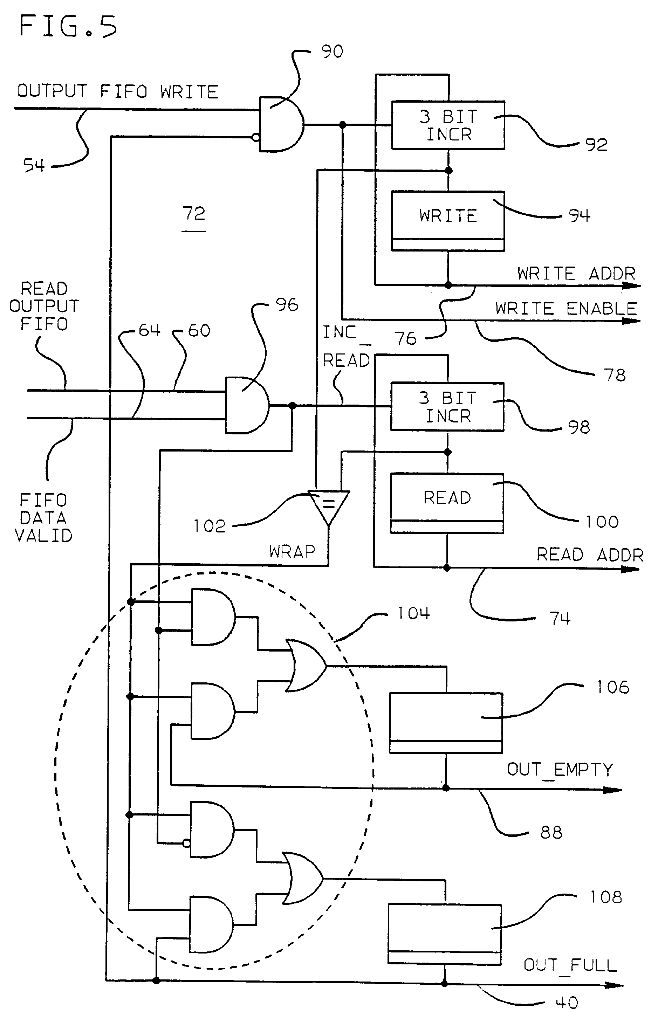

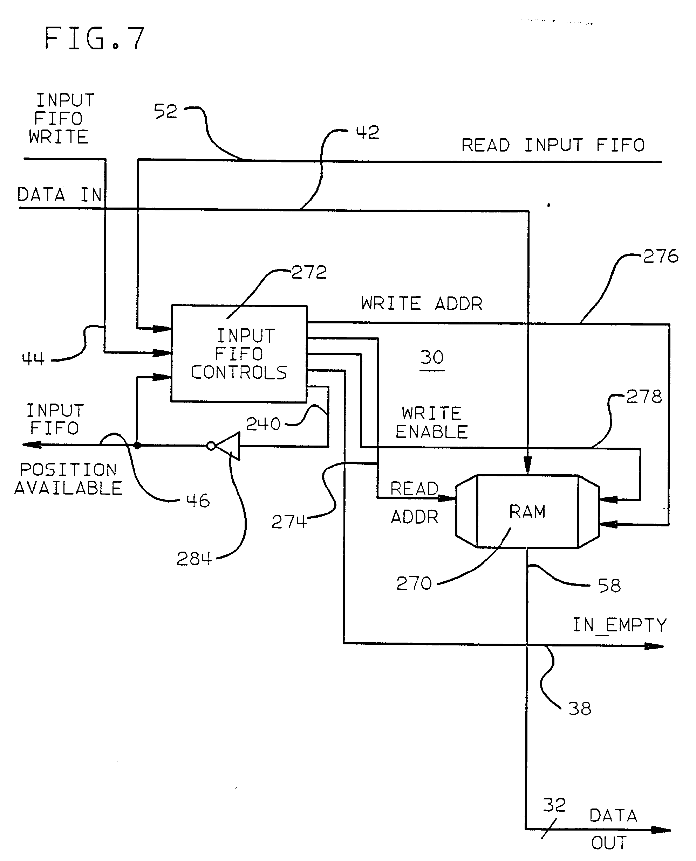

Fig. 5 shows the internals of the OUTPUT FIFO CONTROLS 72 (Fig. 4). It contains write address logic comprising gate 90, THREE BIT INCREMENTER 92 and THREE BIT WRITE register 94. Similarly, it contains read address logic comprising gate 96, THREE BIT INCREMENTER 98, and READ register 100. In addition, it contains a state machine comprising three bit comparator 102, gates 104, single bit register 106, and single bit register 108. Fig.6 shows the state diagram and next state equations for the state machine.

Referring again to Fig. 4, the READ and WRITE addresses are used as pointers into the dual ported RAM 70. The READ pointer is the top of the stack, the WRITE pointer is the bottom of the stack. The pointers are incremented in a circular fashion (i.e. they wrap to zero). If the pointers are ever equal, the FIFO is either empty or full.

The state machine keeps track of which state the pointers are in: 10 = empty, 00 = neither, 01 = full. Initially, the pointers are made equal and the state is set to the empty state by simple logic not shown. The empty state blocks reads. When a WRITE occurs, the WRITE pointer is incremented. This causes wrap to de-assert and neither state is entered. In neither, reads and writes are allowed. It remains in the "neither" state until the pointers become equal again. The INC-READ line 110, which indicates that a READ occurred, is used to determine whether to go to the full or return to the empty state. If the INC-READ line 110 is not active, the WRITE pointer moved on top of the read pointer which is the full condition. In the full condition, writes are blocked. When a READ occurs, the neither state is re-entered.

Fig. 7 shows the INPUT FIFO 30 (Fig. 2) of the preferred embodiment of the present invention. As can be seen, the INPUT FIFO 30 is nearly identical to the OUTPUT FIFO 34 (Fig. 4). It is based around a dual port RAM 270 and the appropriate control logic, INPUT FIFO CONTROLS 272. The input bus of the RAM is the DATA IN bus 42 from the previous pipeline processor. There is no OR gate to generate the neutral value, such as OR gate 82 (Fig. 4). The OUTPUT bus 58 of the RAM is the input bus of the ALU 32, (see Fig. 2). The MCU 36 (Fig. 2) provides the READ INPUT FIFO line 52 and has as an input the IN_EMPTY line 38. This is in contrast to the OUTPUT FIFO (see Fig. 4) where the connections are to the WRITE OUTPUT FIFO line 54 and the OUT_FULL line 40. The IN_EMPTY line 38 is connected to inverting open collector driver 284. The output of open collector driver 284 is the INPUT FIFO POSITION AVAIL line 46 which is connected in parallel with the other INPUT FIFO POSITION AVAIL lines on the other processors that are in parallel with this one. The control logic also receives the WRITE INPUT FIFO line 44 as an input. This line comes from the previous pipeline processor.

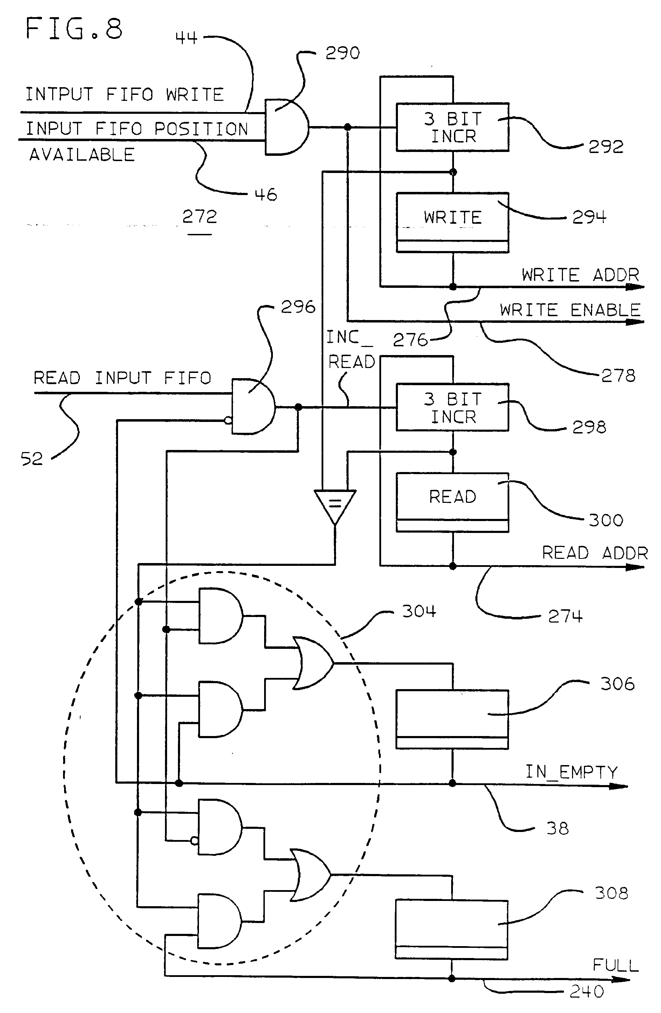

Fig. 8 shows the internals of the INPUT FIFO CONTROLS 272 (Fig. 7). The only difference between the controls for the INPUT FIFO 30 and the OUTPUT FIFO 34 are the connections to gates 90 and 96 of the OUTPUT FIFO 34. In the INPUT FIFO 30, gate 290 has as inputs WRITE INPUT FIFO 44 and INPUT FIFO POSITION AVAIL 35. Gate 296 has READ INPUT FIFO line 52 and IN_EMPTY line 38 as inputs to the non-inverting and inverting inputs thereof. Other lines are as shown.

The processing element in the preferred embodiment as described above is specifically designed to be operated advantageously in parallel with other like processing elements. Very little microcode is necessary to support it. Executing coordinate transformation is an excellent example of the benefit of parallel multiple processing elements according to the preferred embodiment of the present invention. In typical graphics coordinate transformations, the coordinate is represented as a 1 by 4 matrix of data x, y, z, 1. The transformation is performed by multiplying this 1 by 4 matrix times a 4 by 4 matrix called the transformation matrix. This requires 12 multiplies and 9 additions. With the preferred embodiment, it is possible to use 4 processing elements in parallel each doing four multiplies and three adds. It is possible to do this in a completely pipelined fashion so that each processing element is reading a new data item and producing a new result on every cycle. Each processing element contains a single column of the transformation matrix in registers in its ALU. In parallel, each computes the result of the incoming 1 by 4 matrix times its 4 by 1 column matrix. By properly ordering the results, this produces the transformed coordinate. For normal graphics applications, a list of input points is supplied instead of a single coordinate. The four processing elements in parallel can be fed a consecutive stream of coordinate data and keep up with it, running at one data transfer in and out every cycle.

The programming support to do this is quite straightforward. The use of the input and output FIFOs and their transparent microcode idle cycles simplifies the synchronization of the chips. The only other support is the ability to generate a 'hole' in the output FIFO. To connect chips in parallel, the user simply ties the input and output pins together one for one. This includes the data busses as well as the FIFO handshaking lines.

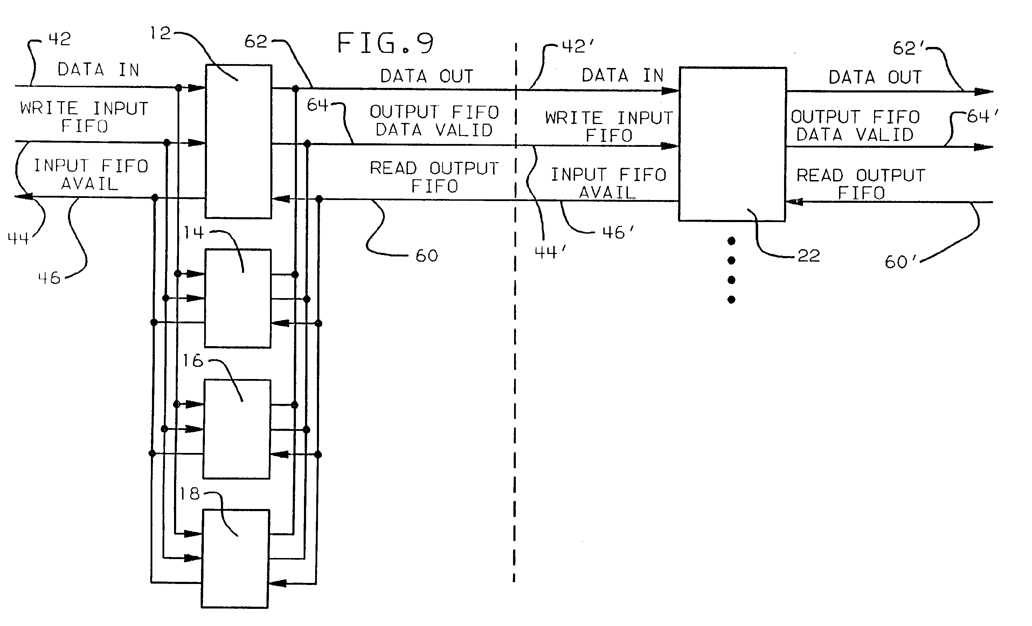

Fig. 9 is a diagram based on Fig. 1, that shows the connection of the four parallel processing elements 12-18 feeding processing element 22 in a parallel/pipelined configuration. Processing elements 24-28 of Fig. 1 have been omitted in the interest of clarity. It will be understood that their inputs and outputs are connected in parallel in the same manner that the inputs and outputs of elements 12-18 are. The output drivers are constructed to be 'dot ANDing'. If a processing element is driving its output bus all high, it has no effect on the result of the dot ANDs. Any other element that is driving a low will cause the result to be low.

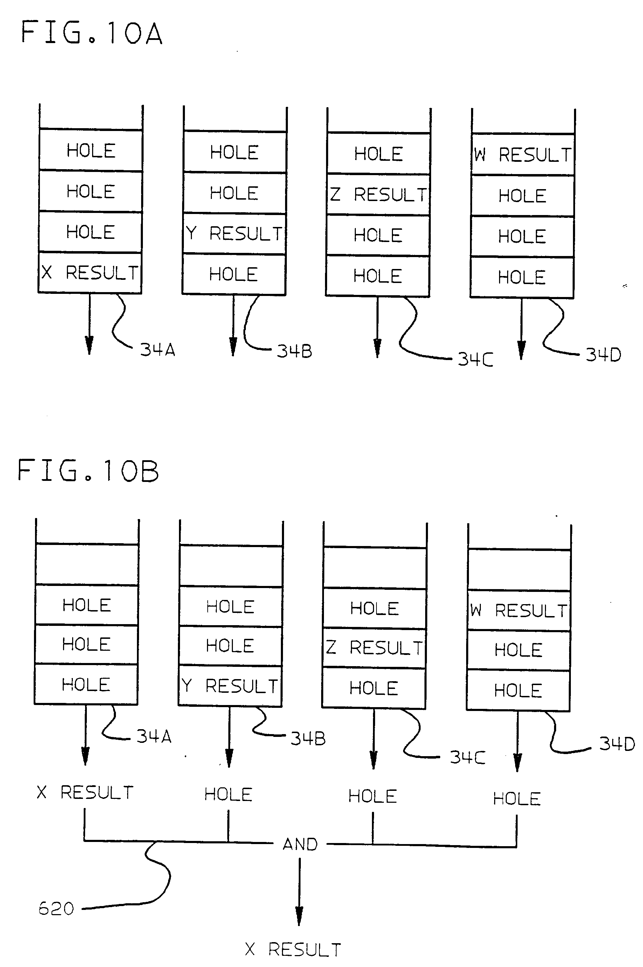

There is a control point (line 66, Fig. 4) to force the bus 62 going into the RAM 70 (Fig. 4) to be all ones. This is a 'hole'. To reiterate and expand on Figs. 3A and 3B, and the supporting text therefore, Fig. 10A and 10B show the contents of the output FIFOs of four processing elements after completing a point transformation. In Fig. 10A we see the four FIFOs 34A-D with the data in them. Processing element A has a computed result at the bottom of FIFO 34A. The three other processing elements B-D have each placed a hole in their FIFOs 34B-D. When the data is read out as in Fig. 10B, the composite value on the dot ANDed output bus 620 is the desired result from processing element 1. Likewise, the rest of the results from the remainder of the processing elements 34B-D line up with a hole in every other processing element.

The preceding discussion implies that all of the processing elements must operate in lock step synchronization with each other. This is not necessary. As stated above, the FIFO handshaking lines are also dot ANDed. The lines from the four INPUT FIFOs (30, Fig. 2) that indicate there is at least one open position in the INPUT FIFO (line 46, Fig. 2, Fig. 9) are dot ANDed. The next stage in the pipeline sees the AND of each having one position available. This is: all have at least one position available. Likewise, the output FIFO handshaking line that indicates that there is at least one valid piece of data in the OUTPUT FIFO (line 64, Fig. 2, Fig. 9) is dot ANDed. The external world sees the composite of the ANDing which is that all processing elements have at least one valid piece of data.

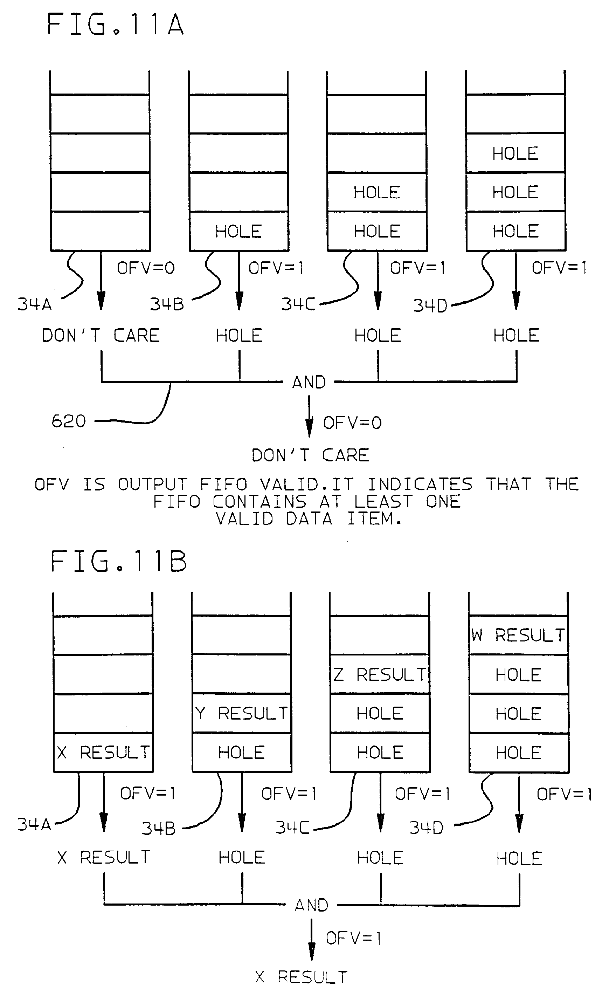

Figs. 11A and 11B show a situation where this comes into play. Fig. 11A shows the state of the four OUTPUT FIFOs 34A-34D very early in a routine. All four processing elements are reading points in and calculating their result, but none of them have finished yet. All of the processing elements except element A have placed at least one hole in their OUTPUT FIFO 34B-D. Fig. 11A shows the condition of the line coming out of the output FIFO which indicates if the FIFO has at least one valid data item, i.e. the OFV state. Processing elements B-D are trying to drive the output FIFO data valid line high. Processing element A, however, is trying to drive it low. Since it is a dot AND, the composite line is low since one of the lines is low. This prevents the external world from removing any data from any of the chips. This ensures that the first hole in processing elements B-D, will line up with the first result as is desired. The input FIFO stays in synchronization in the same manner.

Using the processing elements in parallel is not limited to point transformation algorithms. Any algorithm that can be split into sections that work on a common input stream and produce a known number of results would be applicable. Strictly, it is not even necessary that the sections work on common data or apply the same algorithm to the data. Since each processing element has unique microcode, the first element could read the first n data items and discard the rest of the input stream. The second element could discard the first n items, read the next m, then discard the rest, and so on. The algorithms can run independently with different path lengths. It is only necessary that each processing element knows the order and quantity of results from every other processing element in parallel with it so that it can place the correct number of holes in the right positions in its output FIFO.

## Claims

1. A computer processor comprising a plurality of processors (12,14,16,18) interconnected in parallel for receiving and processing input data, each processor having an arithmetic logic unit (32), a first-in-first-out (FIFO) output register stack (34), and control means (36), characterised in that:
the processors have respective output data lines designed and interconnected such that the result of an individual processor's processing of input data is present at the output of the interconnected plurality of processors provided that the interconnected processors other than said individual processor have a predetermined neutral value present at their output data lines; and
the control means is adapted to allocate input data to the individual interconnected processors, to control writing of the results of their processing of the input data to their respective FIFO output register stacks, and, in correspondence to the writing of an individual processor's processing results, to write a neutral value to the respective FIFO output register stacks of the other processors so that said predetermined neutral value is present at said other processors' output data lines when the results of said processing are present at the output data lines of the processor which performs the processing, thereby to sequence the outputs of the interconnected processors such that no more than one processor at any one time has present at its output data lines the results of its processing of input data.

2. A computer processor according to claim 1, wherein said plurality of processors have their inputs (42,44,46) connected in parallel to an input bus and have their outputs connected in parallel to an output bus, the computer processor further comprising means (36) for providing input data and control data for the processing to be performed in one clock cycle on said input bus, said control data controlling each of said processors to respectively perform the processing of input data allocatable to that processor and to place in its output register stack either the result of its computation or said neutral value for each clock cycle, depending on whether or not the processor is performing the processing for said clock cycle.

3. A computer processor according to claim 1 or claim 2, wherein each of said plurality of processors has an input FIFO buffer for receiving input data, said control means being adapted to test an indicator of whether the input FIFO is empty and an indicator of whether the output FIFO is full, and to prevent reads from the input FIFO and writes to the output FIFO, respectively, in response to a positive result in the tests.

## Patentansprüche

1. Ein Rechner, der eine Mehrzahl an parallel miteinander verknüpften Prozessoren (12, 14, 16, 18) für den Empfang und die Verarbeitung eingegebener Daten umfaßt, wobei jeder Rechner eine arithmetische logische Einheit (32), einen FIFO-Ausgaberegisterstapel (34) und ein Steuermittel (36) umfaßt, dadurch charakterisiert, daß:
die Rechner entsprechende Ausgabedatenleitungen besitzen, die so ausgerichtet und miteinander verknüpft sind, daß das Ergebnis der Verarbeitung der in einen einzelnen Rechner eingegebenen Daten am Ausgang der miteinander verknüpften Mehrzahl an Rechnern vorhanden ist, vorausgesetzt, die miteinander verbundenen Rechner (mit Ausnahme des genannten einzelnen Rechners) weisen an ihren Ausgabedatenleitungen einen vorbestimmten neutralen Wert auf; und
daß das Steuermittel so ausgerichtet ist, daß es die eingegebenen Daten den einzelnen miteinander verknüpften Rechnern zuordnet, das Schreiben der Ergebnisse seiner Verarbeitung der eingegebenen Daten in seine dazugehörigen FIFO-Ausgaberegisterstapel steuert und im Zusammenhang mit dem Schreiben der Verarbeitungsergebnisse des einzelnen Rechners einen neutralen Wert in die dazugehörigen FIFO-Ausgaberegisterstapel der anderen Rechner schreibt, so daß der genannte vorbestimmte neutrale Wert an den Ausgabedatenleitungen der genannten anderen Rechner vorhanden ist, wenn auch die Ergebnisse der genannten Verarbeitung an den Ausgabedatenleitungen des Prozessors, der die Verarbeitung ausführt, vorhanden sind, wodurch die Ausgaben der miteinander verknüpften Rechner sequenziert werden, so daß zu einem beliebigen Zeitpunkt nicht mehr als ein Rechner an seinen Ausgabedatenleitungen die Ergebnisse seiner Verarbeitung von eingegebenen Daten aufweist.

2. Ein Rechner gemäß Anspruch 1, bei dem die Eingaben (42, 44, 46) der genannten Mehrzahl an Prozessoren parallel an einen Eingabebus angeschlossen sind und deren Ausgaben parallel an einen Ausgabebus angeschlossen sind, wobei der Rechner des weiteren ein Mittel (36) aufweist, der die Eingabedaten und die Steuerdaten für die in einem Taktzyklus auf dem genannten Eingabebus auszuführende Verarbeitung bereitstellt, wobei die genannten Steuerdaten jeden der genannten Rechner so steuern, daß sie jeweils die Verarbeitung der eingegebenen Daten, die diesem Rechner zugeordnet werden, ausführen, und in dessen Ausgaberegisterstapel entweder das Ergebnis seiner Berechnung oder den genannten neutralen Wert für jeden Taktzyklus stellen, je nach dem, ob der Rechner die Verarbeitung für den genannten Taktzyklus ausführt oder nicht.

3. Ein Rechner gemäß Anspruch 1 oder 2, bei dem jeder der genannten Mehrzahl an Prozessoren einen Eingabe-FIFO-Puffer für den Empfang eingegebener Daten besitzt, wobei das genannte Steuermittel so ausgerichtet ist, einen Indikator, der anzeigt, ob der Eingabe-FIFO leer ist, und einen Indikator, der anzeigt, ob der Ausgabe-FIFO voll ist, zu testen und bei einem positiven Ergebnis in den Tests Leseoperationen vom Eingabe-FIFO bzw. Schreiboperationen in den Ausgabe-FIFO zu vermeiden.

## Revendications

1. Calculateur comprenant une pluralité de processeurs (12, 14, 16, 18) interconnectés en parallèle pour recevoir et traiter des données d'entrée, chaque processeur ayant une unité logique arithmétique (32), une pile de registres de sortie premier entré-premier sorti (FIFO), 34 et un moyen de contrôle (36), caractérisé en ce que:
les processeurs ont des lignes de données de sortie respectives conçues et interconnectées pour que le résultat du traitement de données d'entrée par un processeur distinct soit présent à la sortie de la pluralité de processeurs pourvu que les processeurs interconnectés autres que le processeur distinct aient une valeur neutre prédéterminée présente à leurs lignes de données de sortie; et
le moyen de contrôle est adapté pour attribuer des données d'entrée aux processeurs distincts interconnectés, pour contrôler l'écriture des résultats de leur traitement des données d'entrée dans leurs piles de registres de sortie FIFO respectives et, suivant l'écriture des résultats de traitement par un processeur distinct, écrire une valeur neutre dans les piles de registres de sortie FIFO respectives des autres processeurs pour que ladite valeur neutre prédéterminée soit présente aux lignes de données de sortie desdits autres processeurs lorsque les résultats dudit traitement sont présents aux lignes de données de sortie du processeur qui accomplit le traitement, pour ordonner de ce fait les sorties des processeurs interconnectés afin que pas plus d'un processeur à un temps donné quelconque n'ait présents à ses lignes de données de sortie les résultats de son traitement de données d'entrée.

2. Calculateur selon la revendication 1, dans lequel ladite pluralité de processeurs ont leurs entrées (42, 44, 46) connectées en parallèle à un bus d'entrée et ont leurs sorties connectées en parallèle à un bus de sortie, le processeur comprenant en outre un moyen (36) pour fournir des données d'entrée et des données de contrôle pour que le traitement soit accompli dans un cycle d'horloge sur ledit bus d'entrée, lesdites données de contrôle contrôlant chacun desdits processeurs pour accomplir respectivement le traitement de données d'entrée qui peuvent être attribuées à ce processeur et pour placer dans sa pile de registres de sortie soit le résultat de son calcul soit ladite valeur neutre pour chaque cycle d'horloge, suivant que le processeur accomplisse ou non le traitement pour ledit cycle d'horloge.

3. Calculateur selon les revendications 1 ou 2, dans lequel chacun de ladite pluralité de processeurs a un tampon FIFO d'entrée pour recevoir des données d'entrée, ledit moyen de contrôle étant adapté pour tester un indicateur indiquant si le tampon FIFO d'entrée est vide et un indicateur indiquant si le tampon FIFO de sortie est plein, et pour empêcher respectivement des extractions dans le FIFO d'entrée et des écritures dans le FIFO de sortie en réponse à un résultat positif des tests.
